# EUROPEAN PATENT APPLICATION

(11) **EP 2 434 382 A1**
(43) Date of publication of application: **28.03.2012**
(21) Application number: 10845678.1
(22) Date of filing: 10.02.2010
(51) Int. Cl.: G06F 3/048

(54) **COMPUTER SYSTEM AND USER OPERATION SUPPORT METHOD USING COMPUTER**

(71) Applicant: Hitachi, Ltd., Chiyoda-ku Tokyo 100-8280 (JP)
(72) Inventor: SHIMADA, Kenta, Tokyo 100-8220 (JP); MIZOTE, Yuji, Tokyo 100-8220 (JP)
(74) Representative: Moore, Graeme Patrick
(86) International application number: PCT/JP2010/000849
(87) International publication number: WO 2011/099073

(57) **Abstract**

To guide a user on a method for operating an application program. When the user pushes an activation button 5A, a navigation process is started. When the user selects a desired task, a subtask window 7 that shows a plurality of subtasks configuring this task is displayed in an application window 5. When the user selects a subtask, a plurality of action windows 8 related to this subtask are displayed simultaneously.

## Description

### [Technical Field]

The present invention relates to a computer system, and a user operation assisting method using a computer.

### [Background Art]

There is known a technology for assisting a user operation on an application program by using animation or word balloons (Patent Literature 1, Patent Literature 2).

### [Prior Art Documents]

### [Patent Literature]

[PTL 1]
   Japanese Patent Application Publication No. H10-207676
[PTL 2]
   Japanese Patent Application Publication No. 2000-112605

### [Summary of Invention]

### [Technical Problem]

In a conventional technology in which the procedure for performing a current operation or the next operation is guided by animation, a balloon or voice, a user cannot easily grasp the position of an operation in relation to the whole series of operations. The more the operation procedure of an application program becomes complicated, the easier it becomes for the user to not understand the positioning an operation in relation to the entire operation procedure, and as a result it becomes more difficult to understand the entire operation procedure.

Even when the user is somewhat trained in the operations, the operations are guided sequentially from start to finish, thereby degrading the convenience.

An object of the present invention, therefore, is to provide a computer system and a user operation assisting method using a computer, which is capable of effectively guiding a user on a method for operating an application program. Another object of the present invention is to provide a computer system and a user operation assisting method using a computer, which is capable of effectively guiding a user on a method for operating an application program and effectively creating a navigation program. Yet another object of the present invention will be apparent from the description of embodiments provided hereinafter.

### [Solution to Problem]

In order to solve the problems described above, a computer system according to a first aspect of the present invention is a computer system that includes at least one computer for executing an application program, wherein the computer has stored therein the application program having a predetermined task, a navigation program for guiding a user on a method for operating the application program, and task management information for managing, for each of a plurality of subtasks configuring the predetermined task, actions showing operation contents for realizing the subtasks, and text messages each showing an outline of each of the subtasks. The computer further causes the application program to generate an application screen used for operating the application program, and displays the generated application screen, causes, in a predetermined situation, the navigation program to use the task management information to generate a task window that includes the predetermined task, superimposes and displays the generated task window on the application screen, causes the navigation program to use the task management information to generate a subtask window that includes the text messages of the respective subtasks when the user selects the predetermined task within the task window, and displays the generated subtask window within the application screen, selects, from among the actions, an action associated with a subtask selected from among the subtasks within the task window, causes the navigation program to generate an action window for displaying the selected action, and superimposes and displays the generated action window on the application screen. Furthermore, when another subtask different from the selected subtask is selected, the computer selects another action associated with the other subtask from among the actions, causes the navigation program to generate another action window for displaying the selected other action, and superimposes and displays the generated other action window on the application screen. In addition, the computer displays the application screen in response to an operation input by the user, regardless of the execution status of the navigation program.

In a second aspect, according to the first aspect, the computer is a server computer. The application program is a management program for managing a client computer accessing the computer. The predetermined situation is a situation where activation of the navigation program is instructed by a user operation that is input from the client computer, and the computer highlights a text message corresponding to the predetermined subtask in the subtask window.

In a third aspect, according to the second aspect, the application program checks the validity of a value that is input to the application screen.

In a fourth aspect, according to the third aspect, the navigation program acquires application screen configuration information showing a configuration of the application screen, from the application program, and determines initial display positions of the subtask window and the action window based on the acquired application screen configuration information.

In a fifth aspect, according to the fourth aspect, the navigation program is generated based on a source code of the navigation program and the application screen configuration information.

In a sixth aspect, according to the fourth aspect, the computer includes a first server computer that executes the application program and a second server computer that executes the navigation program, the second server computer acquiring the application screen configuration information from the application program executed on the first server computer, rendering the application screen, the task window, the subtask window, and the action window by means of the navigation program, and transmitting an operation input from the client computer, to the first server computer.

In a seventh aspect, according to the third aspect, when there exist a plurality of action windows to be selected, the computer displays all of the action windows on the application screen simultaneously.

In an eighth aspect, according to the third aspect, the computer checks whether a version of the application program is compatible with a version of the navigation program, and activates the navigation program when the versions are compatible with each other.

In a ninth aspect, according to the third aspect, a button for activating the navigation program is disposed on a first screen of a plurality of screens of the application screen, and when activating the navigation program after activating the application program, the first screen is displayed in order to operate the button.

In a tenth aspect, according to the third aspect, a highlight window for highlighting the presence of a component corresponding to the action, out of a plurality of components configuring the application screen, is associated with the action window, and the highlight window is superimposed and displayed on the application screen, along with the action window.

In an eleventh aspect, according to the third aspect, the action window is provided with a confirmation button for showing that the user has performed an operation corresponding the action.

The present invention can be interpreted as a user operation assisting method using a computer. In addition, the scope of the present invention includes a combination of the abovementioned aspects as well as other combinations.

### [Brief Description of Drawings]

[Fig. 1]

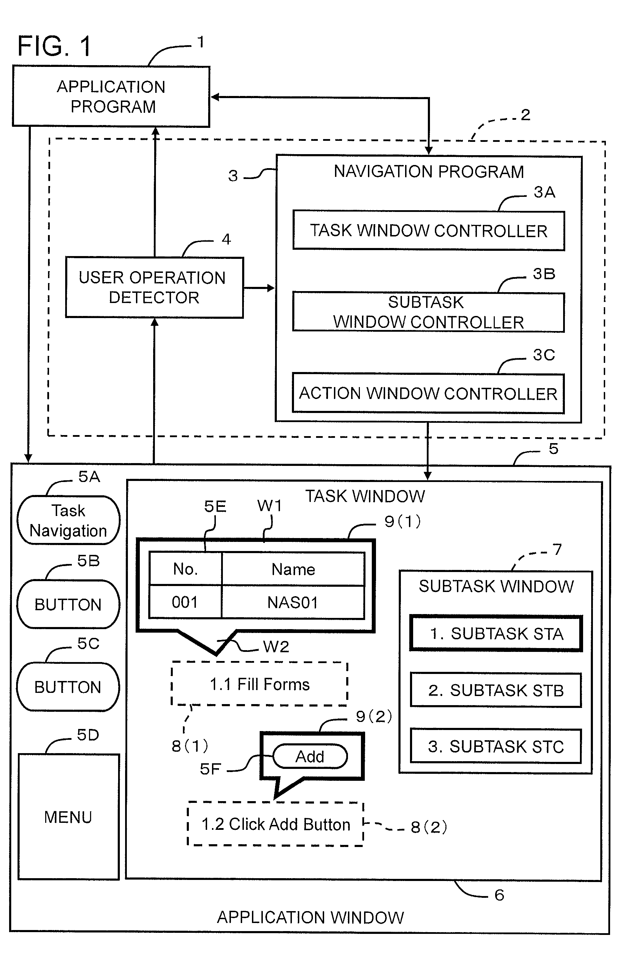

   Fig. 1 is a diagram showing an outline of an embodiment.
[Fig. 2]

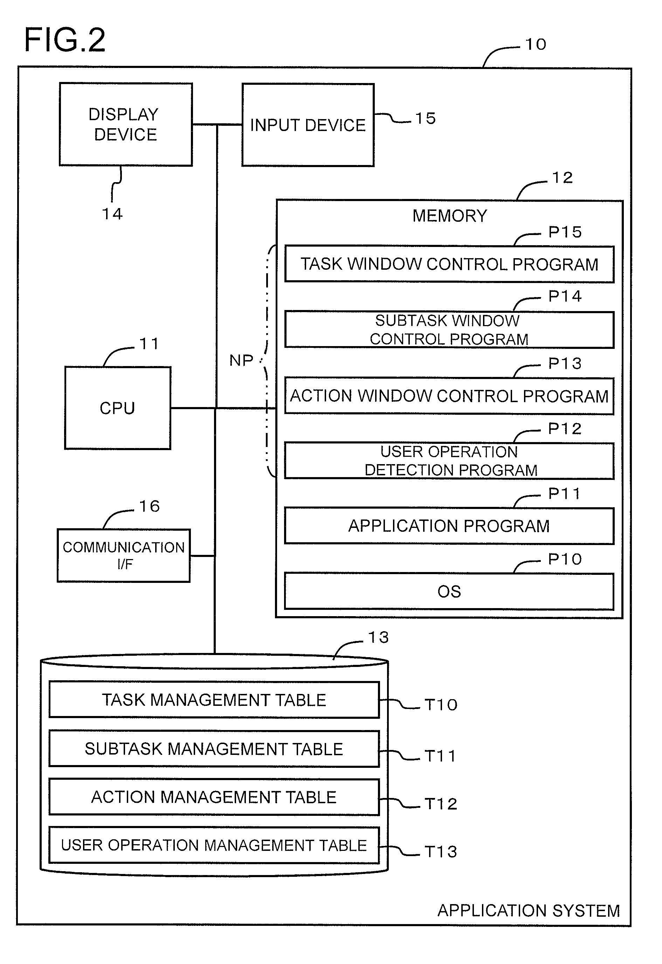

   Fig. 2 is a diagram showing a hardware configuration of an application system.
[Fig. 3]

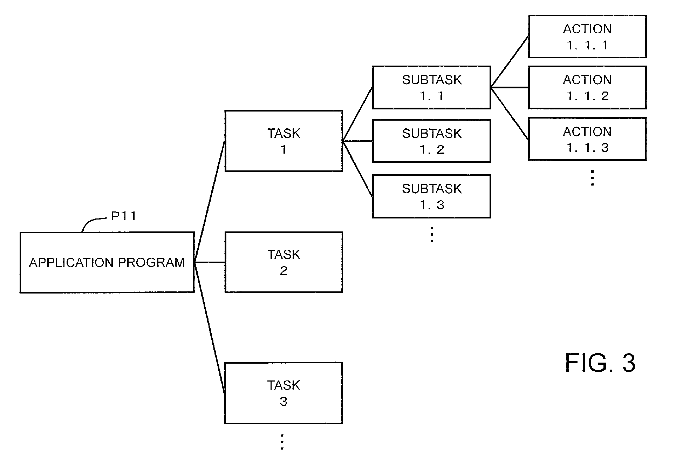

   Fig. 3 is a schematic diagram showing a relationship among a task, subtask and action.
[Fig. 4]

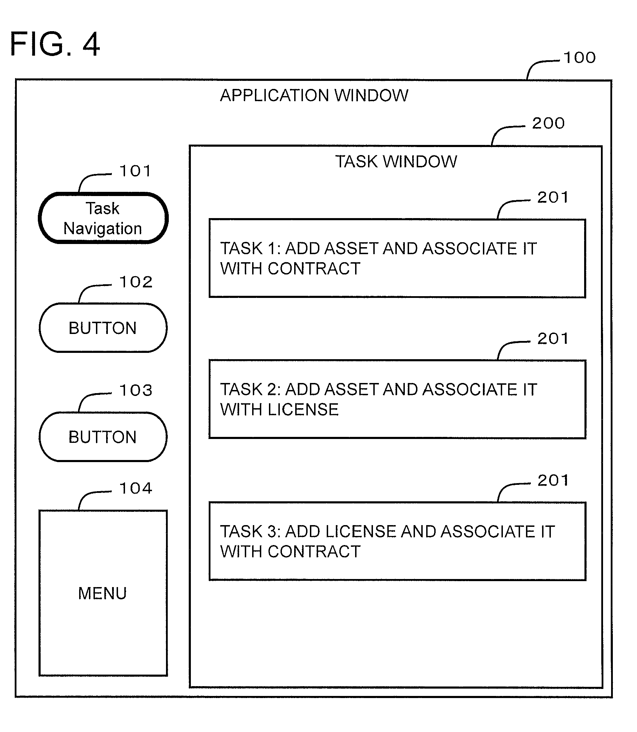

   Fig. 4 is a diagram showing an application window.
[Fig. 5]

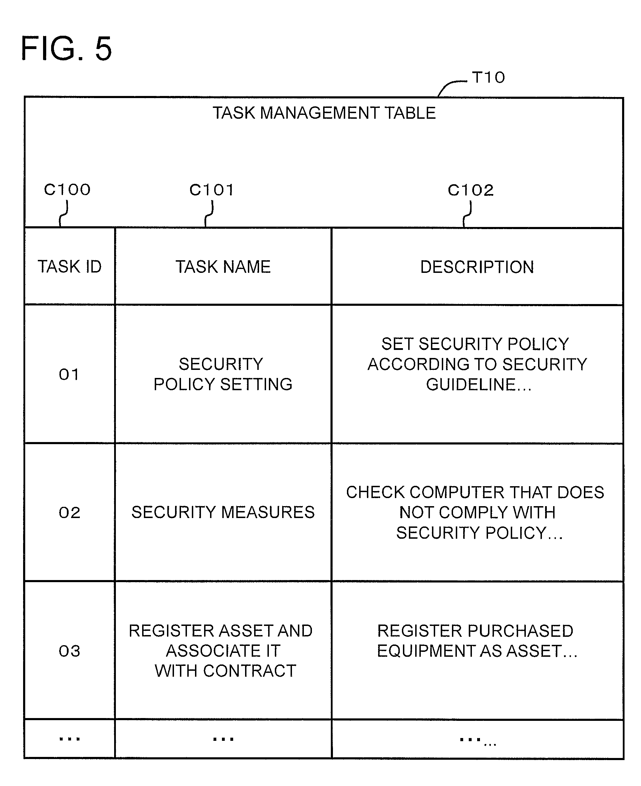

   Fig. 5 is a diagram showing a task management table.
[Fig. 6]

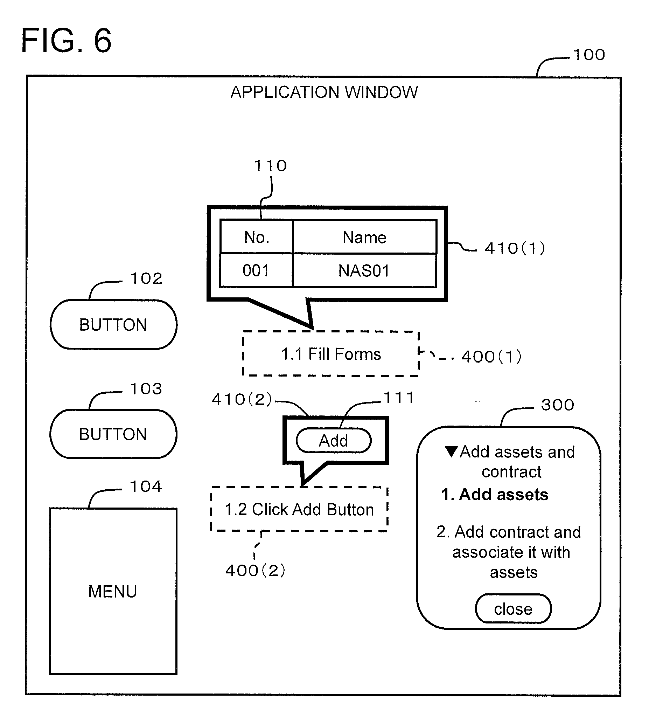

   Fig. 6 is a diagram showing a state in which a subtask window and action window are superimposed and displayed on the application window.
[Fig. 7]

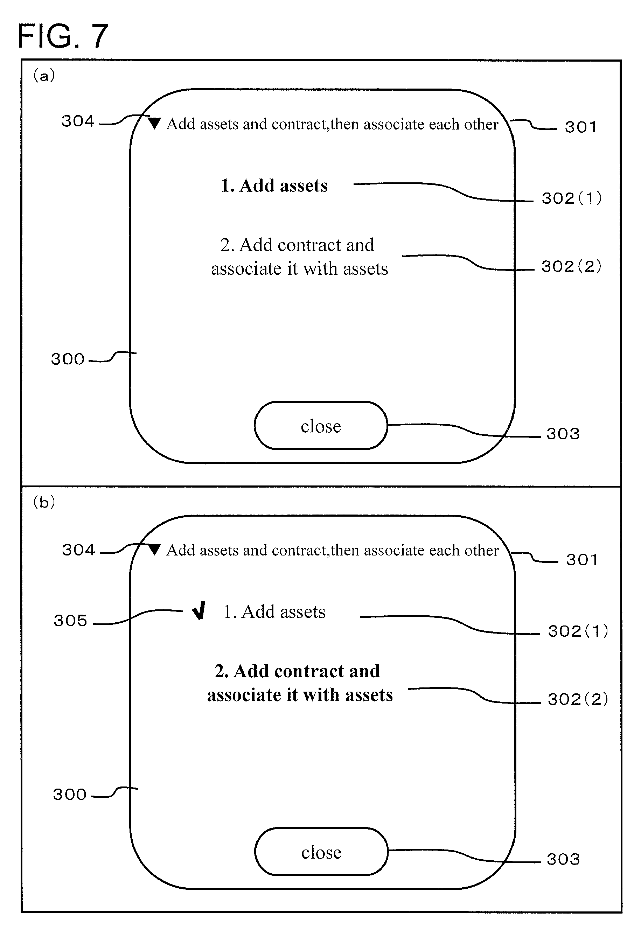

   Fig. 7 is a diagram showing the subtask window.
[Fig. 8]

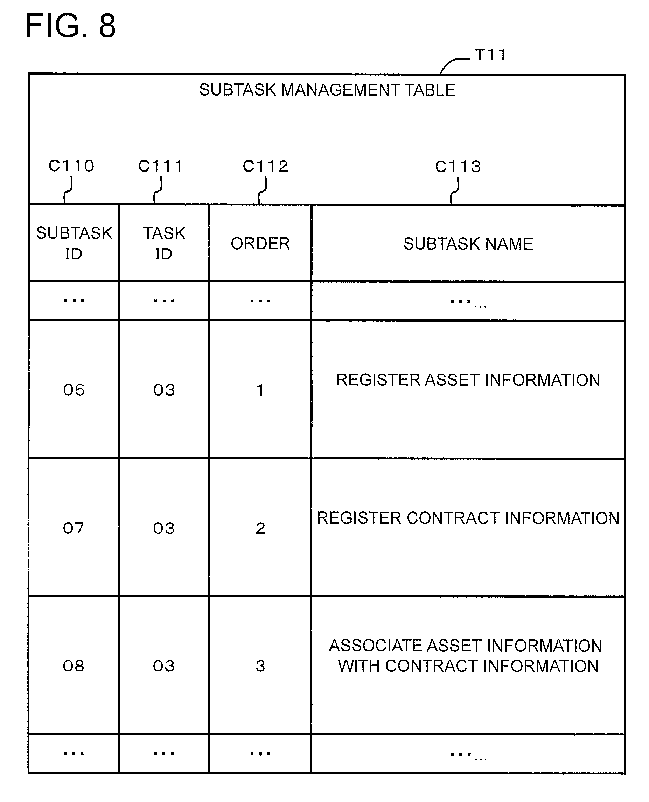

   Fig. 8 is a diagram showing a subtask management table.
[Fig. 9]

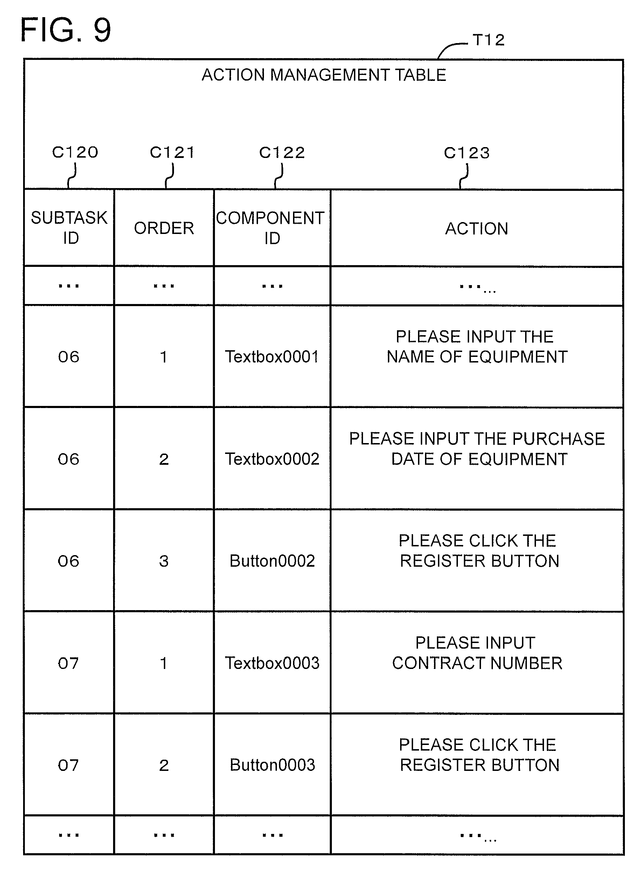

   Fig. 9 is a diagram showing an action management table.
[Fig. 10]

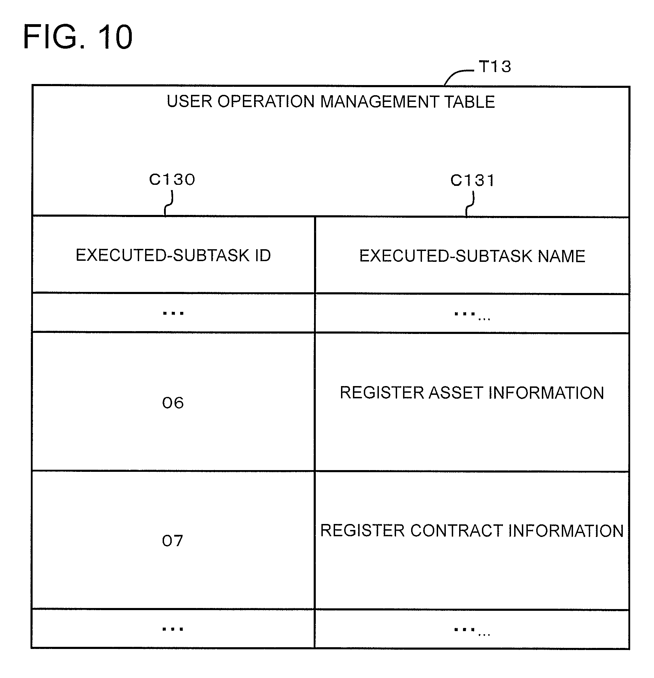

   Fig. 10 is a diagram showing a user operation management table.
[Fig. 11]

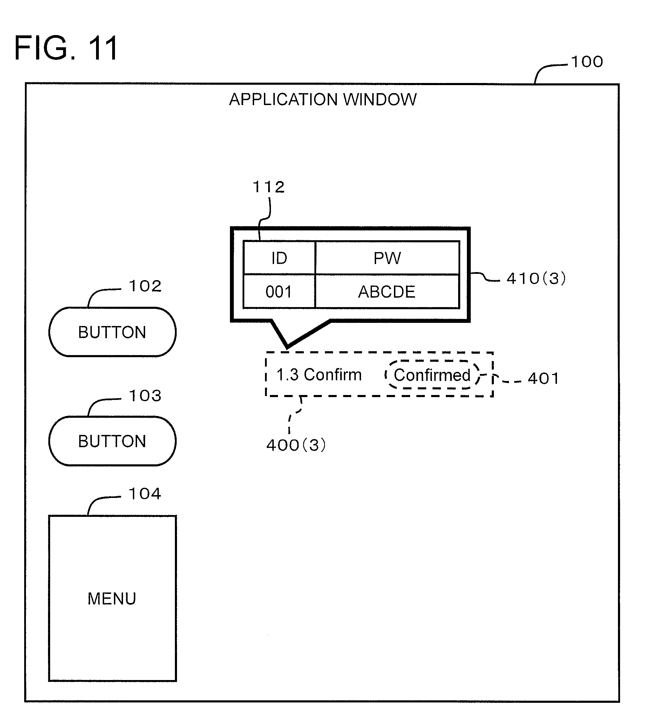

   Fig. 11 shows an example of providing a confirmation button in the action window.
[Fig. 12]

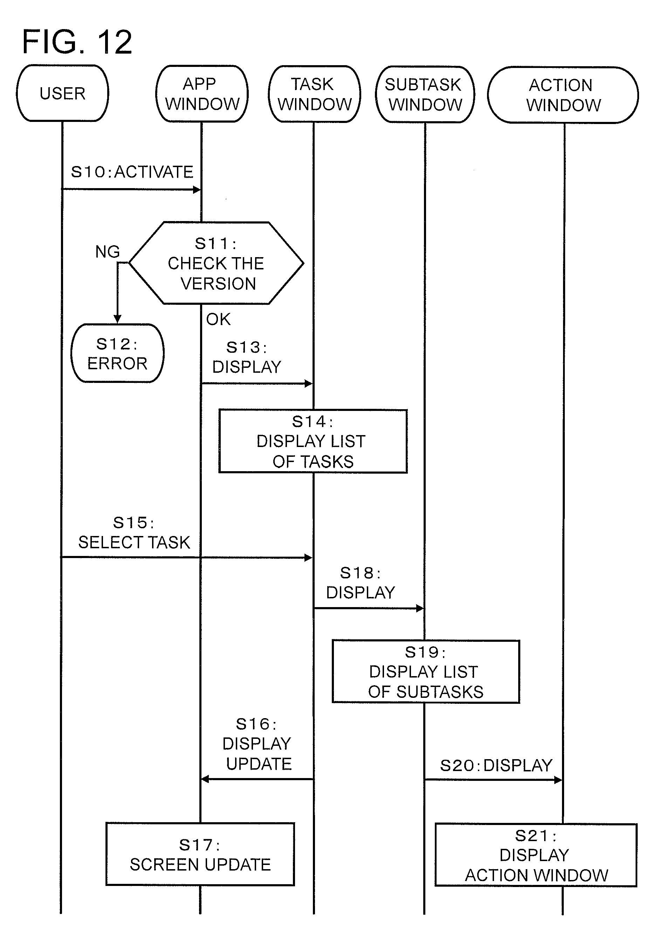

   Fig. 12 is a flowchart showing operations up to displaying the subtask window and the like.
[Fig. 13]

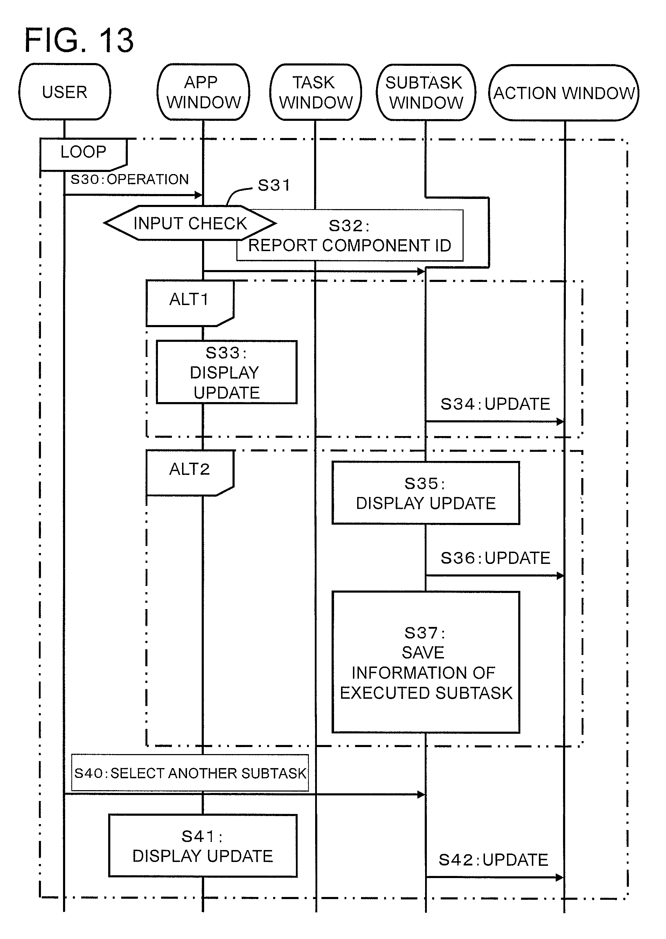

   Fig. 13 is a flowchart showing a process for updating the subtask window or the like in response to a user operation.
[Fig. 14]

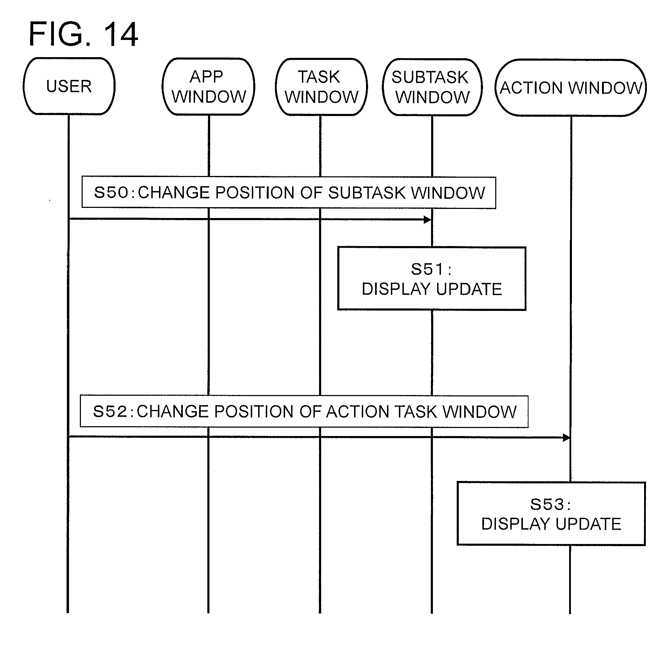

   Fig. 14 is a flowchart showing a process for updating the positions of the subtask window or the like.
[Fig. 15]

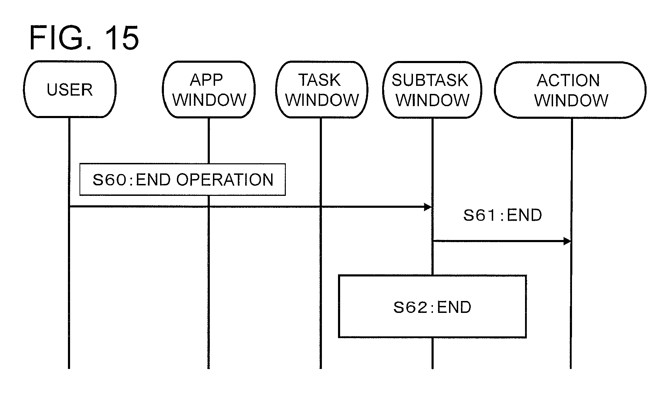

   Fig. 15 is a flowchart showing a process for ending navigation.
[Fig. 16]

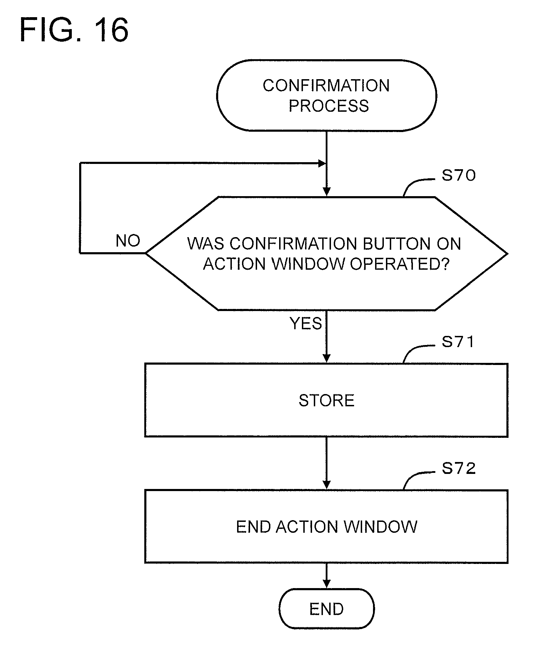

   Fig. 16 is a flowchart showing a process for confirming whether or not the user performs an operation according to an instruction issued by the action window.
[Fig. 17]

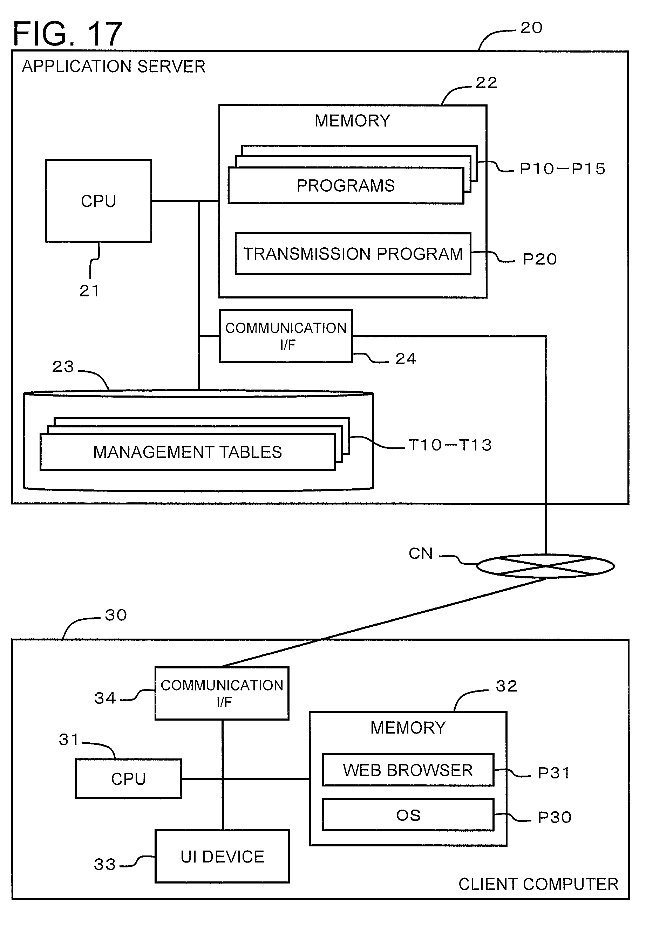

   Fig. 17 is a configuration diagram showing the entire system according to a second embodiment.
[Fig. 18]

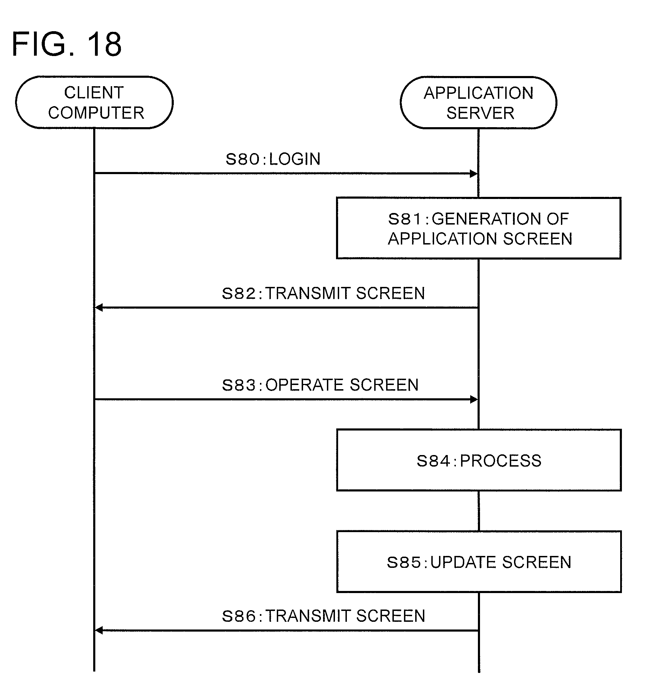

   Fig. 18 is a flowchart showing the entire operations.
[Fig. 19]

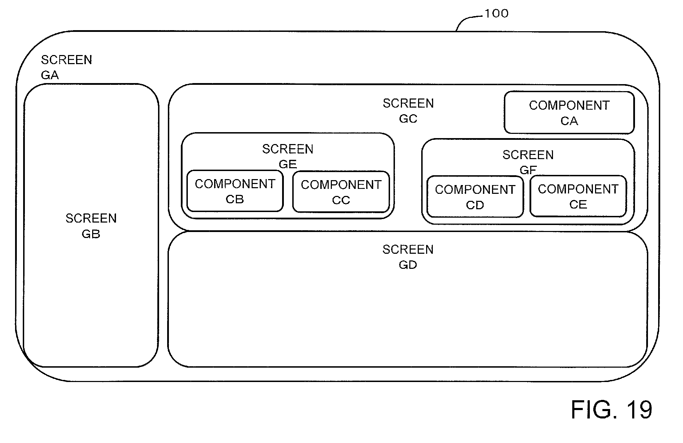

   Fig. 19 is a diagram schematically showing a configuration of the application screen according to a third embodiment.
[Fig. 20]

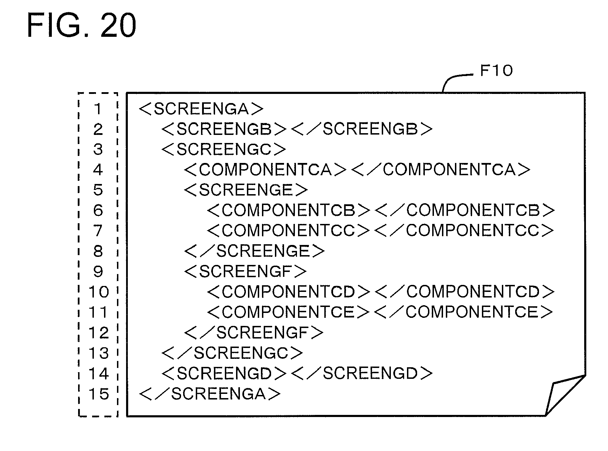

   Fig. 20 is an example of a file describing the configuration of the application screen.
[Fig. 21]

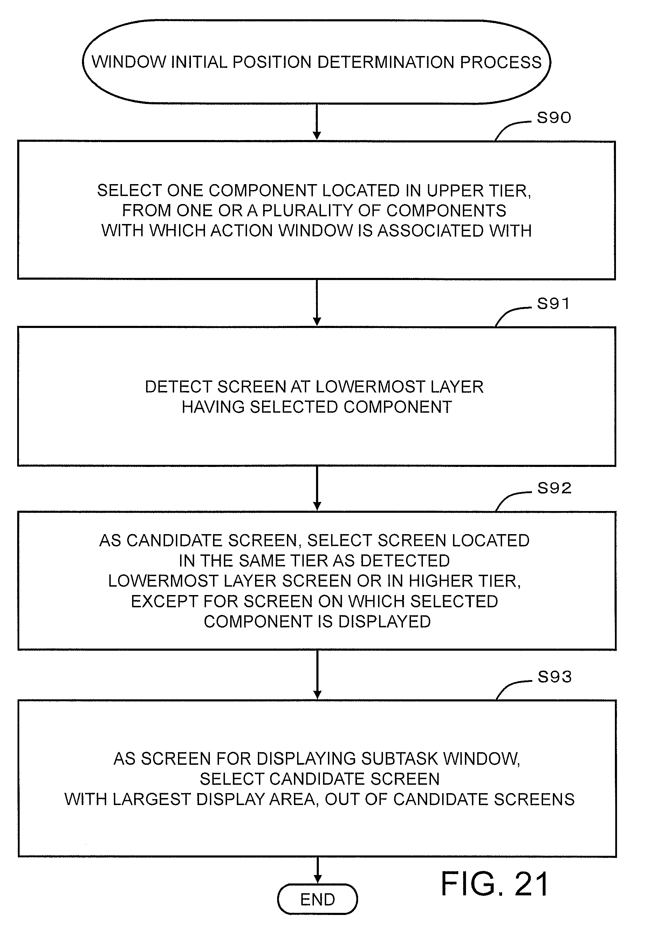

   Fig. 21 is a flowchart showing a process for controlling initial positions of the application window and the like.
[Fig. 22]

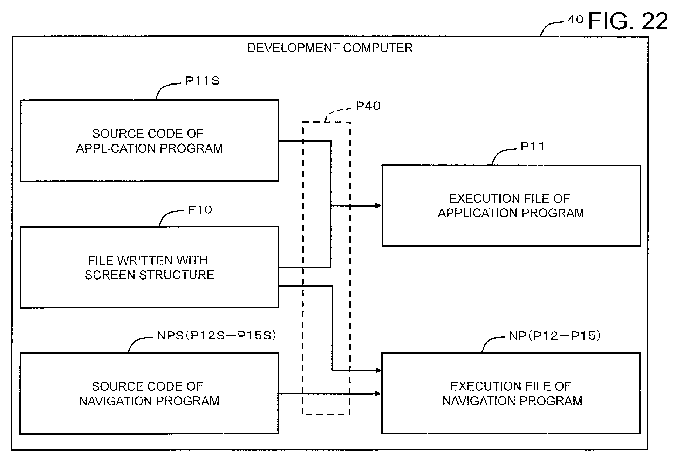

   Fig. 22 is a diagram showing how an application program and navigation program are created, according to a fourth embodiment.
[Fig. 23]

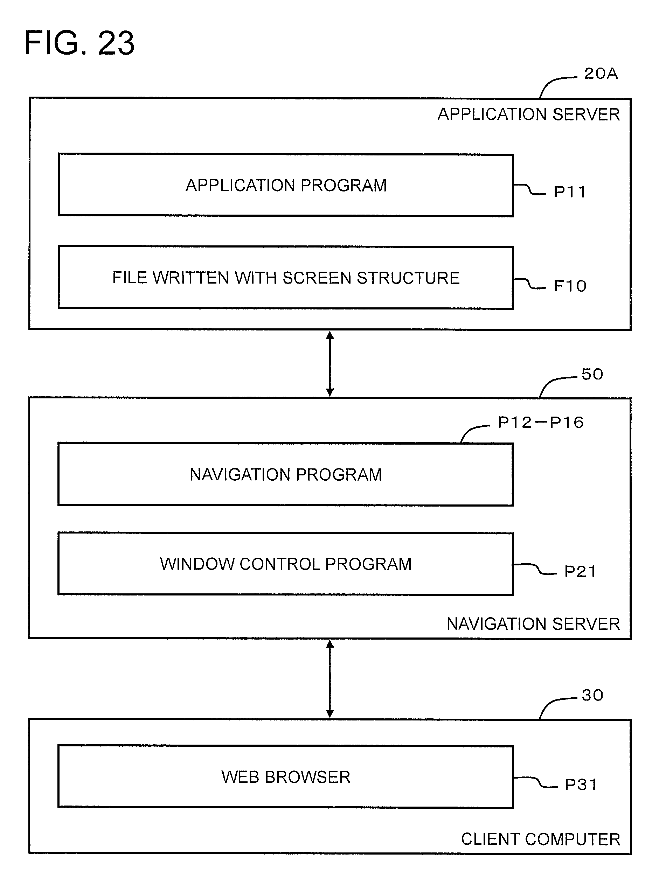

   Fig. 23 is a diagram showing the entire configuration of a system according to a fifth embodiment.

### [Description of Embodiments]

Embodiments of the present invention are now described hereinafter with reference to the drawings. As will be described later, the present invention assists a user operation on an application window 5 by displaying windows 6 to 9 for guiding the user operation, on the application window 5. The present invention also divides a task into a plurality of subtasks to assist the user operation in units of subtask.

Fig. 1 is an explanatory diagram showing an overall outline of a present embodiment. Fig. 1 is illustrated so as to understand and implement the present invention. The scope of the present invention is not limited to the configuration illustrated in Fig. 1. The features that are not illustrated in Fig. 1 will become clear in the following embodiments.

A computer system shown in Fig. 1 has, for example, an application program 1, navigation device 2, application window 5 and the like. The considered configurations of the computer system include the one in which one computer is provided with the application program 1 and the navigation device 2 and the one in which a computer mounted with the application program 1 and a computer mounted with the navigation device 2 are provided separately.

The application program 1 is configured as, for example, a document preparation program, a spreadsheet program, a graphics editing program, a music editing program, a program for the issuance of a variety of tickets, and a program for managing computer assets such as software and hardware.

The navigation device 2 guides a user on a method for operating the application program 1, in order to assist the user. The navigation device 2 includes, for example, a navigation program 3 and a user operation detector 4. The user operation detector 4 may be configured as a part of the navigation program 3.

The navigation program 3 includes, for example, a task window controller 3A, subtask window controller 3B and action window controller 3C. Each of the controllers 3A, 3B and 3C is realized as a computer program. All or part of the controllers 3A, 3B and 3C may be configured and realized as dedicated hardware circuits.

The task window controller 3A controls the display of a task window 6. The subtask window controller 3B controls the display of a subtask window 7. The action window controller 3C controls the display of action windows 8(1) and 8(2) and the display of component highlight windows 9(1) and 9(2).

The user operation detector 4 detects a user operation performed on the application window 5 and informs the application program 1 and the navigation program 3 thereof. Note that the user operation detector 4 may be generated as a dedicated program of the navigation program 3 and distinguished from a program for transmitting the user operation to the application program 1.

The application window 5 corresponds to an "application screen." When the application program 1 is activated, the application window 5 is displayed on a computer screen. Various components 5A to 5E corresponding to the purposes of the application program 1 are disposed in the application window 5. The components are the display elements configuring the application window 5 and the examples thereof include buttons 5A to 5C, a menu 5D, and a table 5E. Therefore, in the following description, the components are often called "display components" but are displayed as "components" in the diagrams for convenience sake.

Note that the button 5A is a button for activating the navigation device 2. Therefore, the button 5A can be called, for example, "guide start button" or "navigation activation means."

When the user operates the button 5A, this operation is detected by the user operation detector 4 and transmitted to the navigation program 3. The task window controller 3A displays the task window 6 on the application window 5.

The task window 6 is a display part for displaying a plurality of predetermined tasks that the application program 1 has, as shown in Fig. 4 that is described hereinafter. The predetermined tasks are, for example, the tasks that are required to be operated by the user and can be defined as tasks each of which includes at least one subtask. Examples of the predetermined tasks include "user registration," "template creation," "ticket purchase" and "registration of computer asset."

When the user selects any one of the plurality of predetermined tasks displayed in the task window 5, this selection operation is detected by the user operation detector 4. When the user selects a predetermined task, the application program 1 creates and displays the application window 6 for realizing the selected predetermined task. The subtask window controller 3B of the navigation program 3 displays the subtask window 7 corresponding to the predetermined task selected by the user, on the application window 5. Note that the task window 6 is erased when a predetermined task is selected.

The subtask window 7 displays a plurality of subtasks included in the selected predetermined task. In the example shown in Fig. 1, the subtask window 7 includes three subtasks, STA, STB and STC. As shown in Fig. 7 that is described hereinafter, the subtask window 7 can display text messages showing the outlines of the subtasks, in place of or along with the names of the subtasks. Furthermore, in the subtask window 7, numerical values indicating the order are set, respectively, for the text messages showing the outlines of the subtasks STA to STC. The numerical values indicating the order are merely information items indicating the order of displaying the subtasks and do not indicate the order of executing the subtasks. However, the user can be allowed to easily understand the subtasks by matching the execution order of the subtasks and the display order of the subtasks.

For example, when the predetermined task is "purchase of a travel ticket, " the subtasks included in the predetermined task can be "1. user registration," "2. specifying travel conditions," and the like. The subtask of "1. user registration" can be associated with a text message such as "please register a customer's name." The subtask of "2. specifying travel conditions" can be associated with a text message such as "please specify departure date and time, as well as particular airline."

For example, when the predetermined task is "registration of computer asset and contract, and association of computer asset with contract, " the subtasks included in the predetermined task can be "1. registration of computer asset, " and "2. registration of contract and association of contract with computer asset." The subtask of "1. registration of computer asset" can be associated with a text message such as "please register a computer asset." The subtask of "2. registration of contract and association of contract with computer asset" can be associated with a text message such as "register a contract and associate it with the computer asset."

Hereinafter, the subtasks are often described simply as the subtasks without distinguishing the subtasks from the text messages associated with the subtasks.

The action window controller 3C displays, on the application window 5, one or the plurality of action windows 8(1) and 8(2) corresponding to a subtask that is selected from among the subtasks STA to STC displayed in the subtask window 7. The action windows 8(1) and 8(2) each contain a text message that simply shows contents of an action and numerical information that shows the execution order.

The action window controller 3C also superimposes and displays the component highlight windows 9(1) and 9(2) corresponding respectively to the action windows 8(1) and 8(2) on the application window 5 along with the action windows 8(1) and 8(2).

Note in the following description that the action windows 8(1) and 8(2) are often called "action window(s) 8," and the component highlight windows 9(1) and 9(2) are often called "component highlight window(s) 9."

The component highlight windows 9(1) and 9(2) are windows for highlighting the presence of the display components 5E and 5F. The component highlight window 9 can be configured as a line surrounding a display component in order to highlight the presence thereof. More specifically, the component highlight window 9 can contain, for example, a contour part W1 surrounding the display component and an arrow part W2 pointing at the corresponding action window 8.

The component highlight window 9 is not limited to the pattern illustrated in the diagram. The component highlight window 9 can be so configured as to visually show the user that the display component corresponding to the action window 8 exists on the application window 5. For example, by making the color of the action window 8 same as the color of the component highlight window 9, the visual element (the arrow part) for showing the relationship between the action window 8 and the component highlight window 9 can be omitted.

In Fig. 1, the first subtask STA is selected. Out of the subtasks STA to STC in the subtask window 7, the top subtask STA, for example, can be selected first. Alternatively, a subtask can be selected after the user performs an operation.

In the former case, the subtask window 7 is displayed in the application window 6 substantially simultaneously with the action window 8 and component highlight window 9 that are related to the top subtask. In the latter case, when the user selects any one of the subtasks after the subtask window 7 is displayed, the action window 8 and component highlight window 9 that are related to this selected subtask are displayed in the application window 5.

In the case of the subtask of "1. user registration, " for example, "1. 1 inputting address, name, phone number and email address," "1. 2 registration of payment method" and the like can be the actions for realizing this subtask.

In the case of the subtask of "2. specifying travel condition, " for example, "2.1 Registration of place of departure, route and destination," "2 . 2 inputting departure date and time," "2. 3 selection of in-flight service," "2. 4 selection of housing," "2. 5 insurance state," and the like can be the actions for realizing this subtask.

In the case of the subtask of "1. registration of computer asset," for example, "1. 1 instruction for adding computer asset," "1.2 Inputting information on computer asset to be added, " "1 . 3 confirmation of added computer asset, " and the like can be the actions for realizing this subtask.

In the case of the subtask of "2. registration of contract and association of contract with computer asset," for example, "2. 1 instruction for displaying a list of registered contracts," "2. 2 instruction for adding contract," "2. 3 inputting information on contract to be added," 2. 4 selection of contract associated with computer asset," "2. 5 selection of computer asset associated with contract," "2. 6 instruction for associating selected computer asset with selected contract", "2. 7 confirmation of association between computer asset and contract," and the like can be the actions for realizing this subtask.

Of the series of actions for realizing the selected subtask, all of the actions that can be operated on the same application window 5 are related to the action windows 8, which are displayed simultaneously. For example, when the user operates the action window 8(1) and the action window 8(2) at the same time on the application window 5, these two action windows 8(1) and 8(2) are displayed simultaneously on the application window 5.

On the other hand, in some cases the series of actions need to be executed in a predetermined order. For example, when an action instructed by the first action window 8(1) is executed through a user operation, in some cases the application window 5 is updated and consequently the configuration of the screen changes, and the next action window 8(2) is displayed.

Even when the serious of actions are operated in the predetermined order, for some of these actions that can be executed on the same application window 5, the action windows 8 are displayed simultaneously.

The user operates the application window 5 by using, for example, a keyboard, pointing device or other information input device. The operation of the user is detected by the user operation detector 4.

The navigation program 3 is activated when the button 5A is operated and the start of navigation is instructed. The navigation program 3 displays the subtask 7 on the application window 5 based on the detected user operation and the information acquired from the application program 1.

The user is informed of the contents of a necessary work for realizing the predetermined task, by reading a text message displayed in the subtask window 7. When the user selects any one of the subtasks, out of the series of actions for realizing this subtask, one or more actions that can be realized on the same application window 5 are presented to the user through the action window 8. In addition to the action window 8, the component highlight window 9 corresponding to this action window 8 is also displayed simultaneously on the application window 5.

The user operates the application window 5 while looking at the action window 8 and the component highlight window 9. The application program 1 changes the application window 5 in response to the user operation. When the application window 5 is changed, the navigation program 3 changes the subtask window 7, the action window 8 and the component highlight window 9 in response to the changed application window 5.

When the user selects another subtask, the navigation program 3 displays the action window 8 and component highlight window 9 that correspond to the selected subtask, on the application window 5.

The user can sequentially select the subtasks displayed in the subtask window 7, and can also select a desired subtask regardless of the order. In the example shown in Fig. 1, the user can operate the application window 5 in order of the subtask STA, the subtask STB and the subtask STC. The user can also skip the subtasks STA and STB and operate the application window 5 for the subtask STC. The application program 1 is also informed, through the user operation detector 4, of selection of a subtask performed by the user.

According to the present embodiment configured as above, because the subtask window 7, the action window 8 and the like are superimposed and displayed on the application window 5, the user can operate the application window 5 while looking at the subtask window and the action window 8. Because the user can memorize the operation [sequences] by actually looking at the application window 5, the user can learn more easily and quickly how to use the application program 1.

In the present embodiment, the text messages showing the outlines of the subtasks are displayed in the subtask window 7. Therefore, the user can easily confirm, for example, what kind of subtask is necessary in order to realize the predetermined tasks, in what position a subtask that is currently operated is positioned in relation to the entire predetermined tasks, what kind of a roll each subtask plays, and in what order the subtasks need to be completed. Thus, the user can understand and at the same time learn the complicated usage step-by-step, improving the convenience.

In the present embodiment, a desired subtask is selected from among the plurality of subtasks included in the subtask window 7, whereby an operation guidance service by the navigation program 3 can be received from a desired section. Thus, the user can be assisted with an operation method on only a part that the user is unaccustomed to operating, whereby the convenience is improved. The present embodiment is described hereinafter in detail.

### [Embodiment 1]

Fig. 2 shows an overall outline of the computer system according to the present embodiment. First, the correspondence relation between Fig. 1 and Fig. 2 is explained. A navigation program NP corresponds to the navigation program 3, an application program P11 to the application program 1, a task window control program P15 to the task window controller 3A, a subtask window control program 3B to the subtask window controller 3B, an action window control program P13 to the action window controller 3C, and a user operation detection program P12 to the user operation detector 4. An application window 100 (see Fig. 4) corresponds to the application window 5, a task window 200 (see Fig. 4) to the task window 6, and a navigation activation button 101 (see Fig. 4) to the button 5A. A subtask window 300 (see Fig. 6) corresponds to the subtask window 7, an action window 400 (see Fig. 6) to the action window 8, and a component highlight window 410 (see Fig. 6) to the component highlight window 9. Note that the navigation program NP may not include the user operation detection program P12.

An application system 10 includes at least one computer. The application system 10 has, for example, a microprocessor 11, memory 12, auxiliary storage device 13, display device 14, input device 15, and communication interface 16.

In the memory 12, for example, an operating system P10 ("OS" in the diagram), the application program P11, the user operation detection program P12, the action window control program P13, the subtask window control program P14, and the task window control program P15 are stored.

The microprocessor 11 ("CPU" in the diagram) realizes the following functions by reading and executing the various programs stored in the memory 12.

The auxiliary storage device 13 is configured by a hard disk drive or a flash memory device, and stores therein, for example, a task management table T10, subtask management table T11, action management table T12, and user operation management table T13. Each of these tables is described hereinafter in detail.

The display device 14 configures a user interface device, in cooperation with the input device 15. The display device 14 that presents information to the user is configured as, for example, a display unit. The input device 15 that receives input of information from the user is configured as, for example, a keyboard, pointing device, touch panel, voice-input device, or the like.

The communication interface 16 is a communication circuit for communicating with a server and the like that are not shown in the diagram. For example, the application system 1 can update each program by communicating with a program distribution server.

Fig. 3 schematically shows a relationship among the application program P11, tasks, subtasks, and actions. The application program P11 includes a plurality of tasks in accordance with the purposes of the application program P11.

At least one of the tasks includes one or more subtasks required for the realization of the task. At least one of the subtasks includes one or more actions that should be performed in order to realize the subtask. Examples of the actions include inputting information, selecting information, execution instruction, addition instruction, registration instruction, and confirmation.

Fig. 4 shows an example of the application window 100 and the task window 200. When the application program P11 is activated, the application window 100 is displayed in the display device 14.

The application window 100 that is displayed first includes the button 101 used for activating the navigation program NP. The application window 100 further has other display components 102, 103 and 104.

The user who is not accustomed to the operation method pushes the navigation activation button 101 when starting to use the application program P11. The fact that the activation button 101 is pushed is detected by the user operation detection program P12. The task window control program P15 superimposes and displays the task window 200 on the application window 100. The task window 200 includes a plurality of predetermined tasks 201 included in the application program P11.

For example, in the case in which the application program P11 is a program for managing a computer asset, contract and license possessed by the user, the predetermined tasks 201 can be "addition of asset and contract and association therebetween, " "addition of asset and license and association therebetween," and "addition of license and contract and association therebetween."

Fig. 5 shows the table T10 managing the tasks. The task management table T10 includes, for example, a task ID C100, task name C101, and description C102. The task ID C100 is information for identifying each task. The task name C101 is the name of each task. The description C102 is a text message for explaining the contents of each task. The task control program P15 renders the task window 200 on the application window 100 by reference to the task management table T10.

Fig. 6 is an example of a screen showing the subtask window 300, the action window 400 and the like. When the user selects any one of the tasks 201 in the task window 200, the screen shown in Fig. 4 is switched to the screen shown in Fig. 6.

In the screen example shown in Fig. 6, in place of the task window 200, the subtask window 300, the action window 400 and the component highlight window 410 are displayed in the application window 100. In addition, the navigation activation button 101 is also erased from Fig. 6, because the assistance on the user operation is started.

Fig. 7 shows the details of the configuration of the subtask window 300. Action windows 400(1) and 400(2) are means for guiding the user on a series of actions for realizing a selected subtask. Component highlight windows 410(1) and 410(2) corresponding to the action windows 400(1) and 400(2) respectively are means for calling the user's attention to a display component to be operated by the user. Hereinafter, the action windows 400(1) and 400(2) are often called "action window(s) 400," and the component highlight windows 410 (1) and 410(2) are often called "component highlight window(s) 410," unless otherwise specified.

Fig. 7 shows the subtask windows 300. As shown in Fig. 7(a), the subtask window 300 includes a region 301 displaying the task name, text messages 302(1) and 302(2) indicating the outlines of the subtasks, a button 303 for closing the subtask window 300, and a button 304 for reducing the display size of the subtask window 300.

By looking at the task name display region 301, the user can easily confirm which task is realized by a current operation. The user can also easily confirm the outlines of the subtasks required to realize the task, by looking at the text messages 302(1) and 302(2) of the subtasks. Each of the text messages 302(1) and 302(2) is accompanied by a number indicating the order of displaying the subtasks.

Furthermore, the text message 302 (1) corresponding to a subtask guiding the user on an operation is highlighted more than the text message 302(2) corresponding to another subtask. For example, in the example shown in Fig. 7, the text message 302 (1) related to the subtask that is currently guiding the user is displayed in a bold font. Note that in the following description the text messages 302(1) and 302(2) showing the outlines of the subtasks are often called "text message (s) 302."

The user can erase the subtask window 300 by operating the close button 303, and stop the guidance on the operation method. Even when the navigation program NP is stopped, the user can activate the navigation program NP again by returning to the initial screen (Fig. 4) of the application program P11 to operate the activation button 101.

The user can minimize the display size of the subtask window 300 by operating the folding button 304. The user can further move the subtask window 300 to a desired position by moving the subtask window 300 while selecting anywhere on the subtask window 300 using the pointer.

Fig. 7 (b) shows a state in which all the operations on the first subtask are ended and the operation on the next subtask is guided. A checkmark 305 indicating completion [of a subtask] is displayed in the text message 302 (1) of the completed subtask. The text message 302(2), which shows the user a subtask that is being guided, is displayed in boldface type.

Fig. 8 shows the table T11 for managing the subtasks. The subtask management table T11 includes, for example, a subtask ID C110, task ID C111, order C112, and subtask name C113.

The subtask ID C110 is information for identifying each task. The task ID C111 is information for specifying a task that includes the subtasks. The order C112 indicates the order of displaying the subtasks. The order C112 merely indicates the order displayed in the subtask window 300 and is not a numerical value showing the execution order. However, the order C112 may be a numerical value showing the order of executing the subtasks. The subtask name C113 is a name that briefly shows the contents of each subtask. In other words, the text message 302 displayed in the subtask window 300 is registered in the subtask name C113.

Fig. 9 shows the table T12 for managing the actions. The action management table T12 includes, for example, a subtask ID C120, order C121, component ID C122, and action C123.

The subtask ID C120 is information for specifying a subtask to which an action belongs. The order C121 is numerical information that shows the order of executing the actions. The actions are not necessarily executed in the order described in the order C121. For example, in some cases any of the plurality of actions may be executed first, as long as all the information required eventually is provided. For this reason, the order C121 can be considered as information indicating a recommended execution order.

The component ID C122 is information for specifying a display component corresponding to each action. In the example shown in Fig. 6, the action window 400(1) is associated with a table 110 serving as the display component. Similarly, the other action window 400 (2) is associated with an addition button 111 serving as the display component.

The text message displayed in the action windows are stored in the action C123.

Fig. 10 shows the table T13 for managing the operations performed by the user. The user operation management table T13 includes, for example, an executed-subtask ID C130 and executed-subtask name C131.

The executed-subtask ID C130 is identification information for specifying an executed subtask. The executed-subtask name C131 is the name (text message) of the executed subtask. The subtask window control program P14 displays the text message of the executed subtask, along with the checkmark 305, by reference to the user operation management table T13.

Fig. 11 shows an action window 400(3) having a confirmation button 401. For example, the action window 400(3) seeking confirmation from the user can be provided with the confirmation button 401. The confirmation button 401 is a button used when the navigation program NP (more specifically, the action window control program P13, for instance) detects the confirmation made by the user.

The action window 400(3) shown in Fig. 11 seeks confirmation from the user as to the contents described in a table 112. The user confirms the contents described in the table 112 and thereafter operates the confirmation button 401. As a result, the navigation program NP can detect the fact that the user confirms the contents described in the table 112 in which a component highlight window 410(3) is highlighted.

Fig. 12 shows the overall operation of the system. Each of processes described hereinafter is realized by the microprocessor reading and executing the programs stored in the memory. Therefore, the subject of [the sentence describing] each process hereinafter may be "program" or "microprocessor". Or, each process can be explained using "computer" as the subject.

Note that all or part of the programs may be configured and realized as dedicated hardware circuits. Each of the programs can be installed in a file server by means of the program distribution server that distributes a program. Moreover, each of the programs attached to a recording medium may be read by and installed in the file server.

Fig. 12 shows the operations up to the activation of the navigation program NP. The user uses the input device 15 to activate the application program P11. The application program P11 generates the application window 100 including the navigation activation button 101, and displays the application window 100 on the display device 14 as the initial screen.

When the user operates the navigation activation button 101 to request for the activation of the navigation program (S10), the navigation program checks whether the version of the application program P11 is compatible with the version of the navigation program NP or not. When the both version are compatible with each other, it means that the navigation program NP complies with the application program P11. In other words, it means that the operation of the application program can be guided correctly by means of the navigation program. When the both versions are not compatible with each other (S11: NG), this process is erroneously terminated (S12). The application program 10 displays, on the display device 14, an error message such as "the navigation program does not correspond to the application program. Please update the navigation program to the latest version."

When the version of the application program P11 conforms to the version of the navigation program NP (S11: OK), the task window control program P15 superimposes and displays the task window 200 on the application window 100 (S13).

Note that a configuration in which the transmittances of the task window 200, subtask window 300 and action window 400 can be adjusted is applicable. For example, the windows 200 to 400 can be made translucent and superimposed on the application window 100.

The task window control program P15 displays a list of the tasks 201 in the task window 200 by reference to the task management table T10 (S14). When the user selects one desired task from among the tasks 201 (S15), the task window control program P15 informs the application program P11 of the task 201 selected by the user (S16), and issues an instruction to update the screen. The application program P11 updates the screen configuration of the application window 100 to meet the selected task (S17).

The task window control program P15 displays the subtask window 300 by means of the subtask window control program P14 (S18). The subtask window control program P14 displays a list of the subtasks in the subtask window 300 by reference to the subtask management table T11 (S19). The subtask window control program P14 further displays the action window 400 by means of the action window control program P13 (S20).

The action window control program P13 displays, on the application window 100, one or more action windows 400 for realizing the subtasks, by reference to the action management table T12 (S21). The action window control program P13 further displays, on the application window 100, the component highlight window 410 corresponding to each of the action window 400 (S21).

Fig. 13 shows a process in which the user operates the application window 100 with the assistance on the operation method. Steps S30 to S37 and S40 to S42 shown in Fig. 13 are repeated until all the subtasks for realizing the selected task are executed.

The user operates the components (buttons, menu, tables, etc.) displayed in the application window 100 (S30).

When the user inputs information such as numerical values or characters, the application program P11 carries out checking on the input value (S31). For example, the application program P11 checks whether all the necessary items are input or whether the input value falls within a present range.

For example, the application program P11 can perform control for preventing the actuation of an OK button that is used for proceeding to the next screen, until all the necessary items are input. The user cannot operate the OK button that is not actuated. Additionally, when the input value does not fall within the present range, the application program P11 can display, in the application window 100, an error message such as "please select from 1 to 100."

By allowing the application program P11 to check the input value, it is not necessary to cause the navigation program NP to perform the input value checking. Therefore, the navigation program NP can be configured relatively simply to achieve simple implementation thereof.

The subtask window control program P14 is informed of the component ID for specifying a component operated by the user (S32).

When the screen needs to be switched in response to the operation on the display components performed by the user, the application program P11 updates the screen display of the application window 100 (S33). This is performed when, for example, the user operates a button to move to the next screen.

The subtask window control program P14 updates the display of the action window 400 and the component highlight window 410 in response to the changes in the screen of the application window 100 (S34). The steps S33 and S34 described above are executed when updating the screen of the application window 100 and when the screen of the application window 100 needs to be updated due to switching of subtasks, depending on the display components operated by the user.

On the other hand, next are described steps S35 to S37 that are performed when the display components operated by the user demand to be shifted to the next subtask (when the operation for completing the subtasks is performed) and when the subtask window 300 needs to be updated due to switching of subtasks.

The subtask window control program P14 adds the checkmark 305 to the text message related to an executed subtask and highlights a subtask that is executed next, in boldface type (S35).

The subtask window control program P14 instructs the action window control program P13 to update the action window 400 and the component highlight window 410 in accordance with the shift of the subtask (S36).

The subtask window control program P14 registers the information on the executed subtask in the user operation management table T13 (S37).

On the other hand, sometimes the user wishes to operate another subtask while operating a certain subtask. In this case, the user selects one desired text message 302 from among the text messages 302 of the subtasks that are displayed in the subtask window 300 (S40). As a result, a new subtask is selected.

The application program P11 updates the screen of the application window 100 to meet the new selected subtask (S41). The subtask window control program P14 displays the action window 400 and the component highlight window 410 corresponding to the new selected subtask (S42).

Fig. 14 shows a process performed when the user changes the position of the subtask window 300 and the position of the action window 400. For example, the user selects and moves the subtask 300 to a desired position in the application window 100 (S50). The subtask window control program P14 displays the subtask window 300 in the position specified by the user (S51).

Similarly, the user selects and moves the action window 400 to a desired position in the application window 100 (S52). The action window control program P13 displays the action window 400 in the position specified by the user (S53).

Fig. 15 shows a process performed when ending a navigation process. The user can end the guidance of the operation method anytime by operating the close button 303 of the subtask window 300 (S60).

When the close button 303 is operated, the subtask window control program P14 instructs the action window control program P13 to end the action window 400 and the component highlight window 410 (S61).

Thereafter, the subtask window control program P14 erases the subtask window 300 and ends the process (S62).

Fig. 16 shows a process for detecting a confirmation operation performed by the user. As described with reference to Fig. 11, in the present embodiment the action window 400 (3) having the confirmation button 401 is prepared. For example, the confirmation button 401 is prepared in order to allow the user to confirm that the information input by the user is correct.

When the confirmation button 401 is operated by the user, this operation is then detected by the user operation detection program P12. The action window control program P13 is informed of the operation of the confirmed button 401, by the user operation detection program P12. When the confirmation button 401 is operated (S70: YES), the action window control program P13 stores therein the fact that the user confirms the contents of the display components corresponding to the action window 400 having the confirmation button 401 (S71). The action window control program P13 then ends the process (S72).

In this manner, for example, by allowing the user to confirm the user operation, any erroneous operation can be prevented, and the reliability of the system and the user convenience can be improved.

As described above, according to the present invention, because the subtask window 300 and the action window 400 are superimposed and displayed on the application window 100, the user can operate the application window 100 while looking at the subtask window and the action window. Therefore, the user can learn how to use the application program P11.

In the present embodiment, the text messages showing the outlines of the subtasks respectively can be displayed in the subtask window 300. The user, therefore, can easily grasp the positioning of the operation currently performed by the user, in relation to the entire operations.

In the present embodiment, the user can receive the operation guidance service from a desired section by selecting a desired subtask from among the plurality of subtasks included in the subtask window 300. Thus, the user can be assisted with an operation method on only a part that the user is unaccustomed to operating, whereby the convenience is improved.

In the present embodiment, out of the plurality of action window 400 related to the subtasks that are currently executed, all of the action windows that can be displayed simultaneously are displayed. Therefore, the user can easily find out how much work (how many actions) need to be performed in order to complete the processes that are currently displayed in the application window 100. Consequently, the user can perform the operation while grasping the progress on the current subtask.

### [Embodiment 2]

A second embodiment is described with reference to Figs. 17 and 18. The present embodiment corresponds to a modification of the first embodiment. Hence, mainly the difference between the second embodiment and the first embodiment are described. In the present embodiment, [the computer system] is configured as a so-called client server system.

This system has an application server 20 and client computer 30. The application server 20 and the client computer 30 are coupled to each other via a communication network CN so as to be mutually communicable with each other.

The application server 20 has, for example, a microprocessor 21, memory 22, auxiliary storage device 23 and communication interface 24. The programs P10 to P15 shown in Fig. 2 and a transmission program P20 are stored in the memory 22. The tables T10 to T13 shown in Fig. 2 are stored in the auxiliary storage device 23. The transmission program P20 is a program for transmitting image data to the client computer 30 in response to a request from the client computer 30.

The client computer 30 is configured as, for example, a personal computer, personal digital assistance, cellular phone, or other computer terminal. The client computer 30 has a microprocessor 31, memory 32, user interface device 33 and communication interface 34.

An OS P30 and web browser P31 are stored in the memory 32. The web browser P31 is used for displaying a screen provided by the application server 20 or inputting information to the application server 20.

The user interface device 33 has, for example, an information output device such as a display unit, and an information input device such as a keyboard. The user can exchange information with the application server 20 via the user interface device 33 and the web browser P31.

Fig. 18 shows the entire operations of the present system. The client computer 30 logs into the application server 20 (S80). The application server 30 generates a screen (S81) and transmits this screen to the client computer 30 (S82).

The client computer 30 displays the screen received from the application server 20, in the web browser P31. The user operates the screen displayed in the web browser P31 (S83). The client computer 30 informs the application server 20 of the operation of the screen performed by the user.

The application server 20 performs a predetermined process in response to the operation of the user (S84) and updates the screen (S85). The updated screen is transmitted from the application server 20 to the client computer 30 (S86) and displayed in the web browser P31.

As described above, in the present embodiment, the application program P11 and the navigation program NP are executed on the application server 20, and the obtained result is displayed on the web browser P31 of the client computer 30. The present embodiment configured as described above also accomplishes the same effects as those of the first embodiment. In the present embodiment, because [the computer system] is configured as a client server system, this system can be utilized as long as it has the client computer 30 with the web browser, whereby the convenience can be improved.

### [Embodiment 3]

A third embodiment is described with reference to Figs. 19 to 21. The present embodiment describes a method for superimposing and displaying the subtask window and the like on the application window, without deteriorating the visibility of the application window as much as possible.

Fig. 19 shows an example of the screen configuration of the application window 100. The application window 100 includes, for example, the largest screen GA, a screen GB disposed on the left-hand side of the screen GA, a screen GC disposed in the upper right of the screen GA, and a screen GD disposed in the lower right of the screen GA.

The screen GC includes a screen GE positioned on the right-hand side, a screen GF positioned on the left-hand side, and a component CA disposed in the upper right of the screen GC. The left-hand side screen GE includes a plurality of components CB, CC disposed side by side. The right-hand side screen GF also includes a plurality of components CD, CE disposed side by side.

Fig. 20 shows a screen configuration file F10 describing the screen configuration shown in Fig. 19. The screen configuration file F10 structurally describes the screen configuration of the application window 100, as shown in Fig. 20. Therefore, the screen configuration of the application window 100 can be grasped easily by reference to the screen configuration file F10.

Fig. 21 shows a process for determining the initial position of the subtask window 300. This process is executed by the navigation program. The navigation program selects one component positioned in the highest tier (the shallowest tier), from among one or more components associated with the action window 400 (S90). For example, in the case of the component CA and the component CD, the component CA is selected in S90 because the tier of the component CA is higher than the tier of the component CD.

The navigation program detects a screen of the lowest tier that includes the component selected in S90 (S91). To explain this in the example mentioned above, because the selected component is CA, the screen of the lowest tier that includes the component CA is GC.

The navigation program selects, as candidate screens, other screens that belong to the same tier as the screen detected in S91, or other screens that are positioned in tiers higher than the tier of the screen detected in S91 (S92). However, the screen in which the component selected in S90 is positioned is excluded from the candidate screens.

In the example mentioned above, because the screen detected in S91 is GC, the candidate screens are GA, GB and GD. Because the component CA selected in S90 is displayed in the screen GC, the screen GC is excluded from the candidate screens.

The navigation program detects, from the plurality of candidate screens, a candidate screen that has the largest free area for display, and selects the detected candidate screen as a screen for displaying the subtask window 300 (S93). In the example mentioned above, of the candidate screens GA, GB and GD, the screen with the largest area is the screen GA. However, the screen GA is eliminated due to the small free space thereof. When the screen GB is compared with the screen GD, the screen GD has a larger free space. Thus, the screen GD is selected, and the subtask window 300 is displayed on the screen GD.

Note that the abovementioned method for determining the initial position of the subtask window 300 can be utilized for determining the initial positions of the action windows 400. The initial position of each action window 400 is determined such that the larger the free space for display, the more the action windows 400 can be disposed.

The present embodiment configured as described above also accomplishes the same effects as those of the first embodiment. Moreover, in the present embodiment, more of the subtask window 300 and the like for guiding the user on the operation method are disposed in the screen with larger free space. Thus, the subtask window 300 and the like can be disposed without lowering the visibility of the application window 100 significantly.

Note that the subtask window 300 and the action window 400 can be held and moved using a so-called mouse or other device. The user can therefore move the subtask window 300 and the action window 400 from the initial positions to desired positions.

### [Embodiment 4]

A fourth embodiment is described with reference to Fig. 22. Fig. 22 shows a method for generating the navigation program NP. A development computer 40 is a computer for creating the application program P11 and the navigation program NP. A source code P11S of the application program P11, the file F10 describing the screen configuration of the application window 100, and a source code NPS of the navigation program NP are stored in the development computer 40.

Note that the source code P11S of the application program, the source code NPS of the navigation program, and the screen configuration file F10 are not necessarily stored in the development computer 40 in the first place. A configuration in which the development computer 40 receives a program file created by another computer is also applicable.

The application program P11 is generated by inputting the source code P11S and the screen configuration file F10 into a compiler P40. The navigation program NP is generated by inputting the source code NPS and the screen configuration file F10 into the compiler P40.

The generated application program P11 and navigation program NP are installed in the application server 20 by means of a communication network or a recording medium.

In the present embodiment, the navigation program NP is generated by the source code NPS thereof and the screen configuration file F10. Thus, it is not necessary for a developer of the navigation program P11 to specify the initial positions of the subtask window 300 and the like. This is because the initial position determination process described in the third embodiment can be used for automatically determining the initial positions of the subtask window 300 and the like in accordance with the screen configuration of the application window 100. Therefore, in the present embodiment, efficiency in the development of the navigation program NP can be improved. Additionally, even when the size of the application window 100 is changed, the initial positions of the subtask window 300 and the like can be determined promptly and displayed.

### [Embodiment 5]

A fifth embodiment is described with reference to Fig. 23. Fig. 23 shows the overall outline of the present system. The present system includes an application server 20A, the client computer 30, and a navigation server 50.

The application program P11 and the screen configuration file F10 are stored in the application server 20A. The navigation program NP and a display program P21 are stored in the navigation server 50.

The display program P21 is a program for rendering the subtask window 300 and the like on the application window 100 and displaying the subtask window 300 and the like in the web browser P31 of the client computer 30.

The navigation server 50 receives the application window 100 and the screen configuration file F10 thereof from the application server 20A, and superimposes and displays the subtask window 300 and the like on the application window 100.

The navigation server 50 transmits, to the client computer 30, the screen in which the subtask window 300 and the like are superimposed and displayed on the application window 100, and displays this screen in the web browser P31.

The present embodiment configured as described above also accomplishes the same effects as those of the first embodiment. In addition, in the present embodiment, the application server 20A executing the application program and the navigation server 50 executing the navigation program NP are configured as separate computers. Therefore, when the application server 20A already provides the client computer 30 with an application service, a navigation service can be provided to the user afterwards, by adding the navigation server 50. As a result, the convenience can be improved.

Note that the present invention is not limited to the embodiments described above. Those skilled in the art can make various additions and changes to the embodiments within the scope of the present invention.

### [Reference Signs List]

1: Application program, 2: Navigation device, 3: Navigation program, 4: User operation detector, 5: Application window, 5A: Navigation activation button, 6: Task window, 7: Subtask window, 8 (1) and 8(2): Action windows, 9 (1) and 9(2): Component highlight windows, 10: Application system, 20 and 20A: Application servers, 30: Client computer, 40: Development computer, 50: Navigation server, NP: Navigation program, P11: Application program, P12: User operation detection program, P13: Action window control program, P14: Subtask window control program, P15: Task window control program, F10: Screen configuration file, P21: Display program, P31: Web browser, T10: Task management table, T11 : Subtask management table, T12: Action management table, T13: User operation management table, 100: Application window, 101: Navigation activation button, 200: Task window, 300: Subtask window, 400: Action window, 410: Component highlight window

## Claims

1. A computer system that includes at least one computer for executing an application program,
wherein the computer stores:
the application program including a predetermined task;
a navigation program for guiding a user on a method for operating the application program; and
task management information for managing, for each of a plurality of subtasks configuring the predetermined task, actions showing operation contents for realizing the subtasks, and text messages each showing an outline of each of the subtasks,
wherein the computer:
causes the application program to generate an application screen used for operating the application program, and displays the generated application screen;
causes, in a predetermined situation, the navigation program to use the task management information to generate a task window that includes the predetermined task, superimposes and displays the generated task window on the application screen;
causes the navigation program to use the task management information to generate a subtask window that includes the text messages of the respective subtasks when the user selects the predetermined task within the task window, and displays the generated subtask window within the application screen; and
selects, from among the actions, an action associated with a subtask selected from among the subtasks within the task window, causes the navigation program to generate an action window for displaying the selected action, and superimposes and displays the generated action window on the application screen,
wherein when another subtask different from the selected subtask is selected, the computer selects another action associated with the other subtask from among the actions, causes the navigation program to generate another action window for displaying the selected other action, and superimposes and displays the generated other action window on the application screen, and
wherein the computer displays the application screen in response to an operation input by the user, regardless of the execution status of the navigation program.

2. A computer system according to claim 1,
wherein the computer is a server computer,
wherein the application program is a management program for managing a client computer accessing the computer,
wherein the predetermined situation is a situation where activation of the navigation program is instructed by a user operation that is input from the client computer, and
wherein the computer highlights a text message corresponding to the predetermined subtask in the subtask window.

3. A computer system according to claim 2, wherein the application program checks the validity of a value that is input to the application screen.

4. A computer system according to claim 3, wherein the navigation program acquires application screen configuration information showing a configuration of the application screen, from the application program, and determines initial display positions of the subtask window and the action window based on the acquired application screen configuration information.

5. A computer system according to claim 4, wherein the navigation program is generated based on a source code of the navigation program and the application screen configuration information.

6. A computer system according to claim 4,
wherein the computer includes a first server computer that executes the application program and a second server computer that executes the navigation program,
wherein the second server computer acquiring the application screen configuration information from the application program executed on the first server computer, rendering the application screen, the task window, the subtask window, and the action window by means of the navigation program, and transmitting an operation input from the client computer, to the first server computer.

7. A computer system according to claim 3, wherein when there exist a plurality of action windows to be selected, the computer displays all of the action windows on the application screen simultaneously.

8. A computer system according to claim 3, wherein the computer checks whether a version of the application program is compatible with a version of the navigation program, and activates the navigation program when the versions are compatible with each other.

9. A computer system according to claim 3,
wherein a button for activating the navigation program is disposed on a first screen of a plurality of screens of the application screen, and
wherein when activating the navigation program after activating the application program, the first screen is displayed in order to operate the button.

10. A computer system according to claim 3,
wherein a highlight window for highlighting the presence of a component corresponding to the action, out of a plurality of components configuring the application screen, is associated with the action window, and
wherein the highlight window is superimposed and displayed on the application screen, along with the action window.

11. A computer system according to claim 3, wherein the action window is provided with a confirmation button for showing that the user has performed an operation corresponding the action.

12. A user operation assisting method for using a computer to assist a user with an operation performed on an application program,
wherein the computer stores:
the application program including a predetermined task;
a navigation program for guiding the user on a method for operating the application program; and
task management information for managing, for each of a plurality of subtasks configuring the predetermined task, actions showing operation contents for realizing the subtasks, and text messages each showing an outline of each of the subtasks, and
wherein the computer:
causes the application program to generate an application screen used for operating the application program, and displays the generated application screen;
causes, in a predetermined situation, the navigation program to use the task management information to generate a task window that includes the predetermined task, superimposes and displays the generated task window on the application screen;
causes the navigation program to use the task management information to generate a subtask window that includes the text messages of the respective subtasks when the user selects the predetermined task within the task window, and displays the generated subtask window within the application screen;
selects, from among the actions, an action associated with a subtask selected from among the subtasks within the task window, causes the navigation program to generate an action window for displaying the selected action, and superimposes and displays the generated action window on the application screen; and
when another subtask different from the selected subtask is selected, selects another action associated with the other subtask from among the actions, causes the navigation program to generate another action window for displaying the selected other action, and superimposes and displays the generated other action window on the application screen.

13. A user operation assisting method using a computer according to claim 12,
wherein the computer is a server computer,
wherein the application program is a management program for managing a client computer accessing the computer,
wherein the predetermined situation is a situation where activation of the navigation program is instructed by a user operation that is input from the client computer, and
wherein the computer highlights a text message corresponding to the predetermined subtask in the subtask window.

14. A user operation assisting method using a computer according to claim 12, wherein the application program checks the validity of a value that is input to the application screen by the user operation.

15. A user operation assisting method using a computer according to claim 14, wherein the navigation program acquires application screen configuration information showing a configuration of the application screen, from the application program, and determines initial display positions of the subtask window and the action window based on the acquired application screen configuration information.
